(19) Europäisches Patentamt
European Patent Office
Office européen des brevets

(11) EP 4 375 303 A1

(12) EUROPEAN PATENT APPLICATION

(43) Date of publication:
29.05.2024 Bulletin 2024/22

(21) Application number: 23208743.7

(22) Date of filing: 09.11.2023

(51) International Patent Classification (IPC):
*C08F 10/06* (2006.01) *C08F 4/646* (2006.01)

(52) Cooperative Patent Classification (CPC):
(C-Sets available)
C08F 10/06 (Cont.)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(30) Priority: 22.11.2022 KR 20220157555

(71) Applicant: Hanwha TotalEnergies Petrochemical Co., Ltd.
Seosan-si, Chungcheongnam-do (KR)

(72) Inventors:
- LEE, Seung Cheol
Seosan-si, Chungcheongnam-do (KR)
- PARK, Sun Jae
Seosan-si, Chungcheongnam-do (KR)
- LEE, Young Joo
Seosan-si, Chungcheongnam-do (KR)

(74) Representative: Brevalex
Tour Trinity
1 B Place de la Défense
92400 Courbevoie (FR)

# (54) METHOD FOR PRODUCING PROPYLENE COPOLYMER USING CATALYST SYSTEM HAVING IMPROVED COPOLYMERIZATION ACTIVITY

(57) Disclosed is a method of producing a propylene-based copolymer using a solid catalyst including a carrier, produced by the reaction between dialkoxy magnesium and a metal halide, a titanium halide, and an organic electron donor. According to the disclosure, it is possible to produce a propylene-based copolymer having a high comonomer content and a low amorphous content while maintaining catalyst activity at a highly level and dramatically reducing agglomeration of polymer particles during the production of the copolymer.

EP 4 375 303 A1

(52) Cooperative Patent Classification (CPC): (Cont.)

C-Sets
**C08F 10/06, C08F 4/6465;**
**C08F 10/06, C08F 4/6492;**
**C08F 10/06, C08F 4/651;**
**C08F 10/06, C08F 4/6548;**
C08F 110/06, C08F 2500/12, C08F 2500/18;
C08F 210/06, C08F 210/16, C08F 2500/27,
C08F 2500/34, C08F 2500/35

## Description

## BACKGROUND

1. Technical Field

The present disclosure is a method of producing a propylene-based copolymer, and particularly, to a method capable of producing a propylene-based copolymer having a high comonomer content and a low amorphous content while maintaining high catalyst activity and dramatically reducing agglomeration of polymer particles during the production of the copolymer.

2. Related Art

The contents described below merely provide background information related to the present invention and do not constitute a prior art.

Polypropylene is a material that is very useful in real life or commercially, and is widely used, especially in household items such as food containers, as well as automobiles and electronic products. For the performance of various products utilizing such polypropylene, it is important to improve the rigidity of polypropylene by ensuring high crystallinity thereof.

Meanwhile, the impact strength required for automotive interior and exterior materials can be satisfied by producing a propylene-based block copolymer having a high amorphous content, and to this end, the role of a polymerization catalyst is most urgently required. That is, the polymerization catalyst system should be designed to improve the stereoregularity of the resulting polymer and to satisfy high copolymerizability of propylene with an alpha-olefin. In addition, for economic efficiency in polymer production, it is more advantageous for the catalyst to have higher polymerization activity.

Meanwhile, catalyst systems that are used for gas phase polymerization, slurry polymerization and bulk polymerization of propylene are generally composed of a Ziegler-Natta catalyst component, alkyl aluminum, and an external electron donor. In particular, such a catalyst component is known as a solid catalyst containing magnesium, titanium, an internal electron donor and a halogen as essential components. It is known that the internal electron donor has a significant effect on the catalyst activity and the stereoregularity of the resulting polymer depending on the molecular structure thereof.

It is well known that the external electron donor serves to improve the isotactic index of the resulting polymer, that is, the stereoregularity, by selectively poisoning or converting the active sites of non-stereoregularity present on the surface of a solid catalyst. In addition, in a propylene copolymer with a comonomer, the external electron donor affects the content of the comonomer in the copolymer and the physical properties of the copolymer. Therefore, various conventional techniques that use various types of silane compounds as external electron donors to obtain polypropylene polymers having improved physical properties are known.

US7893003B and US8067510B disclose a method of controlling low-molecular-weight components using a combination of two different external electron donors. KR1639497B1 proposes a method for improving randomness in which a propylene monomer and a comonomer in a copolymer randomly form polymer chains. KR1764561B1 proposes a method for allowing a propylene-ethylene copolymer to exhibit high transparency and low melting temperature. However, the above patents do not suggest a method that is capable of controlling the agglomeration of polymer particles during copolymer production to improve productivity. Thus, it is necessary to suggest a method that reduces the agglomeration of polymer particles during copolymer production.

[Prior Art Documents]

[Patent Documents]

(Patent Document 1) US7893003B
(Patent Document 2) US8067510B
(Patent Document 3) KR1639497B1
(Patent Document 4) KR1764561B1

## SUMMARY

The present disclosure has been made in order to solve the above-described problems occurring in the prior art, and an object of the present disclosure is to provide a method for producing a propylene polymer or a propylene copolymer with a comonomer, which is able to produce polypropylene in high yield and may also maintain an amorphous content, which causes agglomeration of polymer particles during the production of the copolymer, at a low level, while maintaining the comonomer content at a high level, and a catalyst system for use in the method.

Another object of the present disclosure is to a propylene-based copolymer produced by the above method and having significantly reduced particle agglomeration.

To achieve the above objects, the present disclosure provides a method of producing a propylene polymer or a propylene-based copolymer using a catalyst system, wherein the catalyst system comprises:

A) a Ziegler-type catalyst as a main catalyst component comprising magnesium, titanium, a halogen and an internal electron donor;
B) an alkyl aluminum compound as a cocatalyst; and
C) an external electron donor composed of:

a) a dialkoxysilane-based compound represented by the following Formula 1; b) a trialkoxysilane-based compound represented by the following Formula 2; and c) a trialkoxysilane-based compound represented by the following Formula 3.

[Formula 1] $R^1R^2Si(OR^3)_2$

wherein $R^1$ and $R^2$ are each independently an alkyl group having 1 to 12 carbon atoms, an aryl group having 6 to 12 carbon atoms, a cycloalkyl group having 4 to 12 carbon atoms, an alkylamine group having 1 to 12 carbon atoms, an alkylsilyl group having 1 to 12 carbon atoms, or an alkoxysilyl group having 1 to 12 carbon atoms, and $R^3$ represents an alkyl group having 1 to 3 carbon atoms;

[Formula 2] $R^4Si(OR^5)_3$

wherein $R^4$ represents an alkyl group having 1 to 12 carbon atoms, an aryl group having 6 to 12 carbon atoms, a cycloalkyl group having 4 to 12 carbon atoms, an alkylamine group having 1 to 12 carbon atoms, an alkoxy group having 1 to 12 carbon atoms, an alkylsilyl group having 1 to 12 carbon atoms, or an alkoxysilyl group having 1 to 12 carbon atoms, and $R^5$ represents an alkyl group having 1 to 4 carbon atoms;

[Formula 3] $R^6Si(OR^7)_3$

wherein $R^6$ represents an alkenyl group having 2 to 12 carbon atoms, and $R^7$ represents an alkyl group having 1 to 4 carbon atoms.

The amount of change in the amorphous content of the propylene polymer or propylene-based copolymer relative to catalyst activity depending on the comonomer content of the propylene polymer or propylene-based copolymer satisfies Relational Expression 1 below.

[Relational Expression 1]

$$R/A=k*C+m$$

wherein R represents the amorphous content (X/S wt%) of the polymer, A represents the catalyst activity (kg-polymer/g-cat), C represents the comonomer content (wt%) in the polymer or copolymer, k denotes the amount of change in the amorphous content relative to catalyst activity depending on the change in the comonomer content, and m is a constant of linear relationship. Specifically, in Relational Expression 1 above, k is 0.050 or less, preferably 0.049 or less, more preferably 0.048 or less, and the lower limit thereof is 0.020. In this case, the agglomeration of polymer particles may be further reduced.

Specifically, a method of producing the solid catalyst may include steps of:

(1) reacting dialkoxy magnesium with a metal halide compound at relatively low temperature in the presence of an

organic solvent;

(2) reacting the reaction product of step (1) with at least one internal electron donor while increasing the reaction temperature; and

(3) reacting the reaction product of step (2) with a titanium halide.

Step (1) of the above-described method of producing the solid catalyst may include reacting metal magnesium, an alcohol and a reaction initiator, in which the metal magnesium and the alcohol may be added in two or more portions, and the reaction initiator may be introduced into the reaction system at the beginning of the reaction, and then added one or more times as needed during the reaction.

In the present disclosure, the shape of the metal magnesium particles is not particularly limited, but is preferably in the form of powder having an average particle diameter of 10 to 500 μm, more preferably 50 to 300 um. If the average particle diameter of the metal magnesium is less than 10 μm, the average particle size of the carrier, which is the product, becomes excessively fine, and if the average particle diameter of the metal magnesium is more than 500 μm, the average particle size of the carrier becomes excessively large, and it is difficult for the carrier to have a uniform spherical shape, and thus the resulting catalyst is difficult to have a uniform particle shape.

As the alcohol, it is preferable to use one or a mixture of two or more selected from among aliphatic alcohols represented by the formula ROH (where R is an alkyl group having 1 to 6 carbon atoms), for example, methanol, ethanol, normal propanol, isopropanol, n-butanol, isobutanol, n-pentanol, isopentanol, neo-pentanol, cyclopentanol, and cyclohexanol, or aromatic alcohols such as phenol. More preferably, one or a mixture of two or more selected from among methanol, ethanol, propanol and butanol is used. Most preferably, ethanol is used.

Meanwhile, the metal magnesium and the alcohol are preferably used in each step at a ratio of 1:4 to 1:50 as the ratio of the number of moles of the metal magnesium: the number of moles of the alcohol, more preferably 1:10 to 1:40. If the metal magnesium and the alcohol are used at a ratio of less than 1:10, a problem may arise in that the viscosity of the slurry increases rapidly, making uniform stirring difficult, and a large amount of fine particles is generated, and if the metal magnesium and the alcohol are used at a ratio of more than 1:50, a problem may arises in that the particles of the resulting carrier have a rough surface or particle formation is not achieved.

A nitrogen halide compound may be used as the reaction initiator in the reaction between the metal magnesium and the alcohol.

The nitrogen halide compound that may be used as the reaction initiator is not particularly limited, but at least one compound selected from the group consisting of compounds represented by Formulas 4 to 7 below may be used.

[Formula 4]

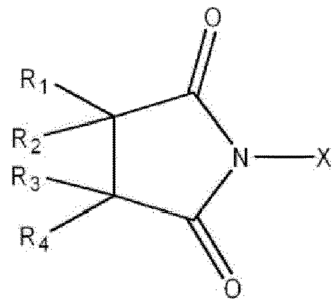

The compound represented by Formula 4 is an N-halide succinimide-based compound wherein X is a halogen, and $R_1$, $R_2$, $R_3$ and $R_4$ are each independently hydrogen, $C_1$-$C_{12}$ alkyl, or $C_6$-$C_{20}$ aryl.

[Formula 5]

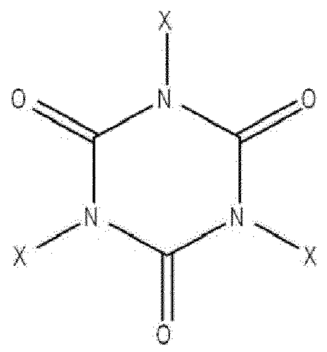

The compound represented by Formula 5 is a trihaloisocyanuric acid-based compound wherein each X is independently a halogen.

[Formula 6]

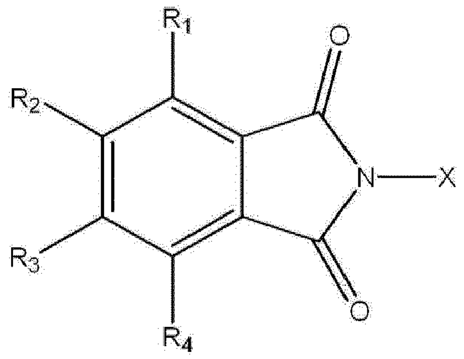

The compound represented by Formula 6 is an N-halophthalimide-based compound wherein X is a halogen, and $R_1$, $R_2$, $R_3$ and $R_4$ are each independently hydrogen, $C_1$-$C_{12}$ alkyl, or $C_6$-$C_{20}$ aryl.

[Formula 7]

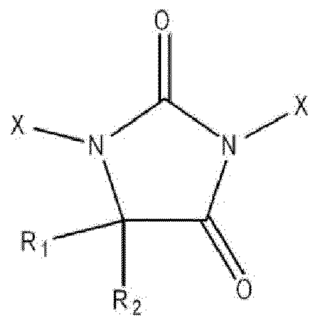

The compound represented by Formula 7 is a hydantoin-based compound wherein each X is independently a halogen, and $R^1$ and $R^2$ are each independently hydrogen, $C_1$-$C_{12}$ alkyl, or $C_6$-$C_{20}$ aryl.

Meanwhile, a halogen compound or a magnesium halide compound may be used as the reaction initiator. In a specific example, the halogen compound may be a compound such as $Br_2$ or $I_2$, and the magnesium halide compound may be $MgCl_2$, $MgBr_2$, $MgI_2$ or the like.

The reaction initiator is preferably used in an amount of 0.05 to 0.5 mol based on 1 part by weight of the total weight of the magnesium metal used. If the reaction initiator is used in an amount of less than 0.05 mol, the reaction rate may be excessively low, and if the reaction initiator is used in an amount of more than 0.5 mol, the particle size of the product becomes excessively large or a large amount of fine particles may be generated.

In the reaction between the metal magnesium and the alcohol in the present disclosure, the metal magnesium and the alcohol may be added in 3 to 7 divided portions, and the reaction initiator is preferably added at the beginning

of the reaction, and then added in 2 to 7 divided portions as necessary during the reaction. When the number of the divided portions of the metal magnesium and the alcohol and the number of times the reaction initiator is added are two or less, there are limitations in controlling the particle size, and there are disadvantages in that it is difficult to form spherical particles and the generation of fine particles increases.

Meanwhile, assuming that the total number of the divided portions of the metal magnesium is n, the sum of the amounts of the metallic magnesium introduced from the beginning to $(n-1)^{th}$ is expressed as N, and the amount (number of moles) of the metal magnesium introduced at $n^{th}$ which is the last introduction stage is expressed as W, the amount of the metal magnesium introduced is preferably controlled to satisfy the following Relational Expression 2:

[Relational Expression 2]

$$0.1 \leq N/W\ (\alpha) \leq 1.2$$

If the amount of the metal magnesium introduced is out of the range defined by Relational Expression 2 above, it may be difficult to control the particles, and the generation of fine particles of the polymer during polymerization using the catalyst may increase, making the polymerization process unstable and causing process troubles.

In addition, the stirring speed during the reaction is preferably 50 to 300 rpm, more preferably 70 to 250 rpm. If the stirring speed is excessively low or excessively high, there is a disadvantage in that the particles are not uniform. In addition, the reaction between the metal magnesium and the alcohol is preferably performed at a temperature of 25 to 110°C, more preferably 50 to 100°C, in the presence of the reaction initiator. Thereafter, aging treatment is preferably performed at a temperature of 60 to 110°C. The reaction may also be performed while cooling under reflux at the boiling point temperature of the alcohol. If the reaction temperature and the aging treatment temperature are out of the above ranges, the reaction rate may be very low at 50°C or lower, and the reaction may occur very rapidly at a temperature higher than 110°C, resulting in the formation of fine particles and aggregation between particles, which are undesirable.

Meanwhile, the bulk specific gravity of the dialkoxy magnesium produced by the above-described method is preferably 0.20 to 0.40 g/ml, more preferably 0.20 to 0.30 g/ml. If this bulk specific gravity is less than 0.20 g/ml, particle formation may be difficult or the fine powder content may increase, making it impossible to obtain highly stereoregular polyolefin in high yield. On the other hand, if the bulk specific gravity is more than 0.40 g/ml, it may undesirably affect the particle properties of the resulting polyolefin. The pore volume of the dialkoxy magnesium is preferably 0.01 to 0.2 ml/g, more preferably 0.06 to 0.1 ml/g. When a solid catalyst component produced using this porous dialkoxy magnesium having a relatively small pore volume within a specific range is used for polymerization of olefins, a polymer having high stereoregularity and excellent particle properties may be obtained in high yield. Furthermore, in this case, a copolymer having excellent particle properties and a low proportion of a rubber phase polymer while having a high comonomer content may be obtained in high yield.

There is no particular limitation on the type of organic solvent used in step (1), and examples of the organic solvent include $C_6$-$C_{12}$ aliphatic hydrocarbons, aromatic hydrocarbons, halogenated hydrocarbons, etc., more preferably $C_7$-$C_{10}$ saturated aliphatic hydrocarbons, aromatic hydrocarbons, and halogenated hydrocarbons. In a specific example, the organic solvent may be one or a mixture of two or more selected from among heptane, octane, nonane, decane, toluene, xylene, chlorohexane, and chloroheptane.

The dialkoxy magnesium and the organic solvent are preferably used at a ratio of 1:5 to 1:50 as dialkoxy magnesium weight: organic solvent volume, more preferably 1:7 to 1:20. If the dialkoxy magnesium and the organic solvent are used at a ratio of less than 1:5, the viscosity of the slurry may increase rapidly, making uniform stirring difficult, and if they are used at a ratio of more than 1:50, a problem may arise in that the apparent density of the resulting carrier rapidly decreases or the surface of the particles becomes rough, which is undesirable.

The titanium halide used in the above-described process of producing the solid catalyst may be represented by the following Formula 8.

[Formula 8] $Ti(OR)_nX_{(4-n)}$

wherein each R is independently an alkyl group having 1 to 10 carbon atoms, each X independently represents a halogen element, and n is for adjusting the valence in the formula and is an integer ranging from 0 to 3.

Examples of the titanium halide include $TiCl_4$, $Ti(OCH_3)Cl_3$, $Ti(OC_2H_5)Cl_3$, $Ti(OC_3H_7)Cl_3$, $Ti(O(n\text{-}C_4H_9))Cl_3$, $Ti(OCH_3)_2Cl_2$, $Ti(OC_2H_5)_2C_{12}$, $Ti(OC_3H_7)_2C_{12}$, $Ti(O(n\text{-}C_4H_9))_2C_{12}$, $Ti(OCH_3)_3Cl$, $Ti(OC_2H_5)_3Cl$, $Ti(OC_3H_7)_3Cl$, $Ti(O(n\text{-}C_4H_9))_3Cl$, and the like. Thereamong, $TiCl_4$ is preferably used. In addition, these tetravalent titanium halide compounds may be used alone or in combination of two or more. The reaction temperature in step (1) is -10 to 60°C.

The at least one internal electron donor that is used in step (2) is preferably a diester, particularly, an aromatic

diester, more particularly, phthalic acid diester. Suitable examples of the phthalic acid diester include dimethyl phthalate, diethyl phthalate, di-n-propyl phthalate, diisopropyl phthalate, di-n-butyl phthalate, diisobutyl phthalate, di-n-pentyl phthalate, di(2-methylbutyl)phthalate, di(3-methylbutyl)phthalate, di-neo-pentyl phthalate, di-n-hexyl phthalate, di(2-methylpentyl)phthalate, di(3-methylpentyl)phthalate, di-iso-hexyl phthalate, di-neo-hexyl phthalate, di(2,3-dimethylbutyl)phthalate, di-n-heptyl phthalate, di(2-methylhexyl)phthalate, di(2-ethylpentyl)phthalate, di-iso-heptyl phthalate, di-neo-heptyl phthalate, di-n-octyl phthalate, di(2-methylheptyl)phthalate, diisooctyl phthalate, di(3-ethylhexyl)phthalate, di-neo-hexyl phthalate, di-n-heptyl phthalate, diisoheptyl phthalate, di-neo-heptyl phthalate, di-n-octyl phthalate, diisooctyl phthalate, di-neo-octyl phthalate, di-n-nonyl phthalate, diisononyl phthalate, di-n-decyl phthalate, and diisodecyl phthalate. As the phthalic acid diester, one or a mixture of two or more selected from among compounds represented by the following Formula 9 may be used:

[Formula 9]

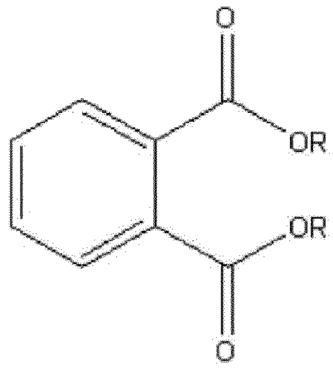

wherein each R is independently an alkyl group having 1 to 10 carbon atoms.

Meanwhile, as the internal electron donor, a 1,3-diether compound is also very preferably used, and a compound having a structure represented by the following Formula 10 are very preferable.

[Formula 10] $R^8R^9C(CH_2OR^{10})(CH_2OR^{11})$

The compound represented by Formula 10 is a 1,3-diether compound wherein $R^8$ and $R^9$, which are the same as or different from each other, are each independently a $C_1$-$C_{18}$ alkyl, $C_3$-$C_{18}$ cycloalkyl or $C_7$-$C_{18}$ aryl radical, and $R^{10}$ and $R^{11}$, which are the same as or different from each other, are a $C_1$-$C_4$ alkyl radical; or the carbon atom at position 2 belongs to a cyclic or polycyclic ring containing 2 or 3 unsaturated bonds and having 5, 6 or 7 carbon atoms.

Specific examples of the 1,3-diether compound as the internal electron donor include 2-(2-ethylhexyl)-1,3-dimethoxypropane, 2-isopropyl-1,3-dimethoxypropane, 2-butyl-1,3-dimethoxypropane, 2-sec-butyl-1,3-dimethoxypropane, 2-cyclohexyl-1,3-dimethoxypropane, 2-phenyl-1,3-dimethoxypropane, 2-t-butyl-1,3-dimethoxypropane, 2- cumyl-1,3-dimethoxypropane, 2-(2-phenylethyl)-1,3-dimethoxypropane, 2-(2-cyclohexylethyl)-1,3-dimethoxypropane, 2-(p-chlorophenyl)-1,3-dimethoxypropane, 2-(diphenylmethyl)-1,3-dimethoxypropane, 2-(1-naphthyl)-1,3-dimethoxypropane, 2-(p-fluorophenyl)-1,3-dimethoxypropane, 2-(1-decahydronaphthyl)-1,3-dimethoxypropane, 2-(p-butylphenyl)-1,3-dimethoxypropane, 2,2-dicyclohexyl-1,3-dimethoxypropane, 2,2-diethyl-1,3-dimethoxypropane, 2,2-dipropyl-1,3-dimethoxypropane, 2,2-dibutyl-1,3-dimethoxypropane, 2,2-diethyl-1,3-diethoxypropane, 2,2-dicyclopentyl-1,3-dimethoxypropane, 2,2-dipropyl-1,3-diethoxypropane, 2,2-dibutyl-1,3-diethoxypropane, 2-methyl-2-ethyl-1,3-dimethoxypropane, 2-methyl-2-propyl-1,3-dimethoxypropane, 2-methyl-2-benzyl-1,3-dimethoxypropane, 2-methyl-2-phenyl-1,3-dimethoxypropane, 2-methyl-2-cyclohexyl-1,3-dimethoxypropane, 2-methyl-2-methylcyclohexyl-1,3-dimethoxypropane,2,2-bis(p-chlorophenyl)-1,3-dimethoxypropane, 2,2-bis(2-phenylethyl)-1,3-dimethoxypropane, 2,2-bis(2-cyclohexylethyl)-1,3-dimethoxypropane, 2-methyl-2-isobutyl-1,3-dimethoxypropane, 2-methyl-2-(2-ethylhexyl)-1,3-dimethoxypropane, 2,2-bis(2-ethylhexyl)-1,3-dimethoxypropane, 2,2-bis(p-methylphenyl)-1,3-dimethoxypropane, 2-methyl-2-isopropyl-1,3-dimethoxypropane, 2,2-diisobutyl-1,3-dimethoxypropane, 2,2-diphenyl-1,3-dimethoxypropane, 2,2-dibenzyl-1,3-dimethoxypropane, 2-isopropyl-2-cyclopentyl-1,3-dimethoxypropane, 2,2-bis(cyclohexylmethyl)-1,3-dimethoxypropyl, 2,2-diisobutyl-1,3-diethoxypropane, 2,2-diisobutyl-1,3-dibutoxy propane, 2-isobutyl-2-isopropyl-1,3-dimethoxypropane, 2,2-di-sec-butyl-1,3-dimethoxypropane, 2,2-di-t-butyl-1,3-dimethoxypropane, 2,2-dineopentyl-1,3-dimethoxypropane, 2-isopropyl-2-isopentyl-1,3-dimethoxypropane, 2-phenyl-2-benzyl-1,3-dimethoxypropane, 2-cyclohexyl-2-cyclohexylmethyl-1,3-dimethoxypropane, 9,9-bis(methoxymethyl)fluorene, 9,9-bis(methoxymethyl)-2,3,6,7-tetramethylfluorene, 9,9-bis(methoxymethyl)-2,3,4,5,6,7-hexafluorofluorene, 9,9-bis(methoxymethyl)-2,3-benzofluorene, 9,9-bis(methoxymethyl)-2,3,6,7-dibenzofluorene, 9,9-bis(methoxymethyl)-2,7-diisopropylfluorene, 9,9-bis(methoxymethyl)-1,8-dichlorofluorene, 9,9-bis(methoxymethyl)-2,7-dicyclopentylfluorene, 9,9-bis(methoxymethyl)-1,8-difluorofluorene, 9,9-bis(methoxymethyl)-1,2,3,4-tetrahydrofluorene, 9,9-bis(methoxymethyl)-1,2, 3,4,5,6,7,8-octahydrofluorene, and 9,9-bis(methoxymethyl)-4-t-butylfluorene.

In addition, cyclic ester compounds having structures represented by the following Formulas 11 to 14 are highly preferred:

[Formula 11]

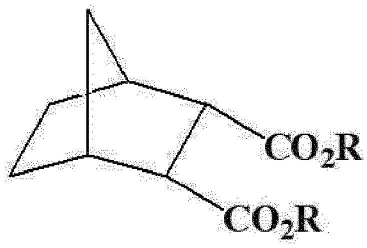

[Formula 12]

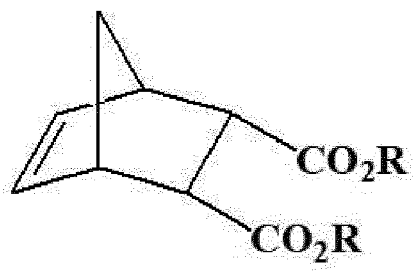

[Formula 13]

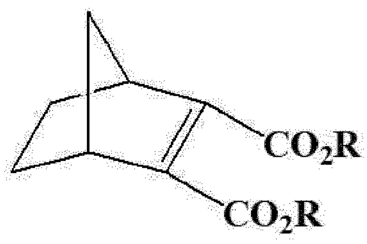

[Formula 14]

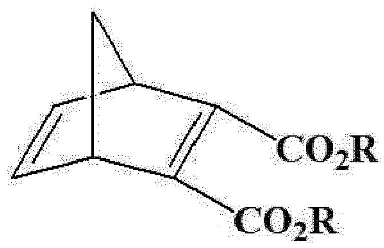

In Formulas 11 to 14, R is each independently a linear or branched alkyl group having 1 to 10 carbon atoms or a cyclic alkyl group having 4 to 12 carbon atoms.

Specific examples of the internal electron donor include bicyclo[2.2.1]heptane-2,3-dicarboxylic acid diisobutyl ester, bicyclo[2.2.1]heptane-2,3-dicarboxylic acid dibutyl ester, bicyclo[2.2.1]heptane-2,3-dicarboxylic acid diisopropyl

ester, bicyclo[2.2.1]heptane-2,3-dicarboxylic acid dipropyl ester, bicyclo[2.2.1]heptane-2,3-dicarboxylic acid diethyl ester, bicyclo[2.2.1]heptane-2,3-dicarboxylic acid dimethyl ester, bicyclo[2.2.1]hept-5-ene-2,3-dicarboxylic acid diisobutyl ester, bicyclo[2.2.1]hept-5-ene-2,3-dicarboxylic acid dibutyl ester, bicyclo[2.2.1]hept-5-ene-2,3-dicarboxylic acid diisopropyl ester, bicyclo[2.2.1]hept-5-ene-2,3-dicarboxylic acid diisopropyl ester, bicyclo[2.2.1]hept-5-ene-2,3-dicarboxylic acid diethyl ester, bicyclo[2.2.1]hept-5-ene-2,3-dicarboxylic acid dimethyl ester, bicyclo[2.2.1]hept-2-ene-2,3-dicarboxylic acid diisobutyl ester, bicyclo[2.2.1]hept-2-ene-2,3-dicarboxylic acid dibutyl ester, bicyclo[2.2.1]hept-2-ene-2,3-dicarboxylic acid diisopropyl ester, bicyclo[2.2.1]hept-2-ene-2,3-dicarboxylic acid dipropyl ester, bicyclo[2.2.1]hept-2-ene-2,3-dicarboxylic acid diethyl ester, bicyclo[2.2.1]hept-2-ene-2,3-dicarboxylic acid dimethyl ester, bicyclo[2.2.1]hept-2,5-diene-2,3-dicarboxylic acid diisobutyl ester, bicyclo[2.2.1]hept-2,5-diene-2,3-dicarboxylic acid dibutyl ester, bicyclo[2.2.1]hept-2,5-diene-2,3-dicarboxylic acid diisopropyl ester, bicyclo[2.2.1]hept-2,5-diene-2,3-dicarboxylic acid dipropyl ester, bicyclo[2.2.1]hept-2,5-diene-2,3-dicarboxylic acid diethyl ester, bicyclo[2.2.1]hept-2,5-diene-2,3-dicarboxylic acid dimethyl ester, and the like, and thereamong, one or a mixture of two or more may be used.

In addition, a cyclic alkyl diester may also be used as the internal electron donor.

In a specific example, the internal electron donor may be one of compounds represented by Formulas 15 to 22 below. In Formulas 15 to 22 below, R1 and R2 are each independently a linear or branched alkyl group having 1 to 20 carbon atoms, a cyclic alkyl group having 4 to 20 carbon atoms, an alkenyl group having 2 to 20 carbon atoms, an aryl group having 6 to 20 carbon atoms, or an arylalkyl group or alkylaryl group having 7 to 20 carbon atoms, and R3 to R12 are each independently hydrogen, a linear alkyl group having 1 to 20 carbon atoms, a branched or cyclic alkyl group having 3 to 20 carbon atoms, an alkenyl group having 2 to 20 carbon atoms, an aryl group having 6 to 20 carbon atoms, or an arylalkyl group or alkylaryl group having 7 to 20 carbon atoms.

[Formula 15]

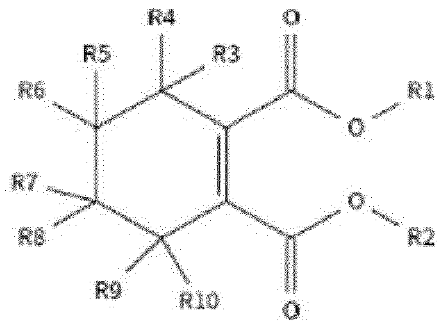

Specific examples of the compound represented by Formula 15 include dimethyl cyclohex-1-ene-1,2-dicarboxylate, diethyl cyclohex-1-ene-1,2-dicarboxylate, 1-ethyl 2-methylcyclohex-1-ene-1,2-dicarboxylate, 1-ethyl 2-propyl cyclohex-1-ene-1,2-dicarboxylate, dipropyl cyclohex-1-ene-1,2-dicarboxylate, diisopropyl cyclohex-1-ene-1,2-dicarboxylate, diethyl 3-methylcyclohex-1-ene-1,2-dicarboxylate, diethyl 3,3-dimethylcyclohex-1-ene-1,2-dicarboxylate, diethyl 3,3,4,4-tetramethylcyclohex-1-ene-1,2-dicarboxylate, diethyl 3,3,4,4,6-pentamethylcyclohex-1-ene-1,2-dicarboxylate, dibutyl 4,5-dimethylcyclohex-1-ene-1,2-dicarboxylate, 2-ethyl-1-propyl 5-ethyl-3,3,4-trimethylcyclohex-1-ene-1,2-dicarboxylate, and the like.

[Formula 16]

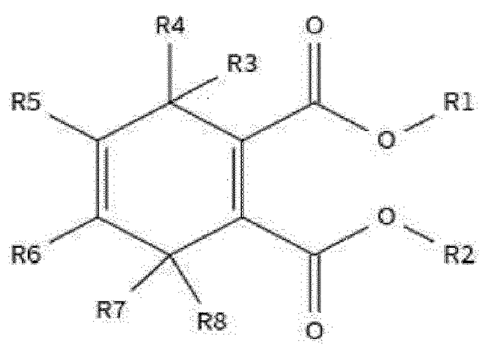

Specific examples of the compound represented by Formula 16 include dimethylcyclohexa-1,4-diene-1,2-dicarboxylate, diethylcyclohexa-1,4-diene-1,2-dicarboxylate, dipropylcyclohexa-1,4-diene-1,2-dicarboxylate, diisopropylcyclohexa-1,4-diene-1,2-dicarboxylate, diethyl 3-methylcyclohexa-1,4-diene-1,2-dicarboxylate, diethyl 3,3-dimethylcyclohexa-1,4-diene-1,2-dicarboxylate, diethyl 3,3,6-trimethylcyclohexa-1,4-diene-1,2-dicarboxylate, diethyl 3,3,6,6-tetramethylcyclohexa-1,4-diene-1,2-dicarboxylate, diethyl 3,3,4,5,6,6-hexamethylcyclohexa-1,4-diene-1,2-dicarboxylate, 1-ethyl-2-propyl4-ethyl-3,5,6-trimethylcyclohexa-1,4-diene-1,2-dicarboxylate, 2-ethyl-1-propyl 5-ethyl-3,3,4,6-tetramethylcyclohexa-1,4-diene-1,2 dicarboxylate, and the like.

[Formula 17]

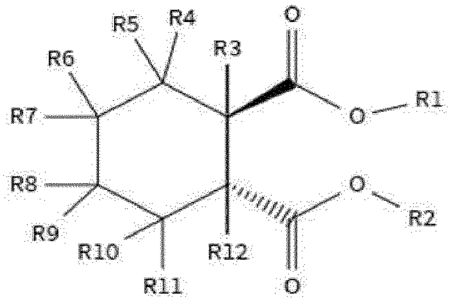

Specific examples of the compound represented by Formula 17 include trans-dimethyl-cyclohexane-1,2-dicarboxylate, trans-1-ethyl-2-methyl cyclohexane-1,2-dicarboxylate, trans-diethylcyclohexane-1,2-dicarboxylate, trans-1-ethyl 2-propylcyclohexane-1,2-dicarboxylate, trans-2-ethyl 1-propyl 1-methylcyclohexane-1,2-dicarboxylate, trans-1-ethyl 2-propyl 1,2-dimethylcyclohexane-1,2-dicarboxylate, trans-1-ethyl 2-propyl-1,2,4,4-tetramethylcyclohexane-1,2-dicarboxylate, trans-1-ethyl 2-propyl-1,2,4,4,5,5-hexamethylcyclohexane-1,2-dicarboxylate, trans-1-butyl 2-ethyl-1,4,5,5-tetramethylcyclohexane-1,2-dicarboxylate, and the like.

[Formula 18]

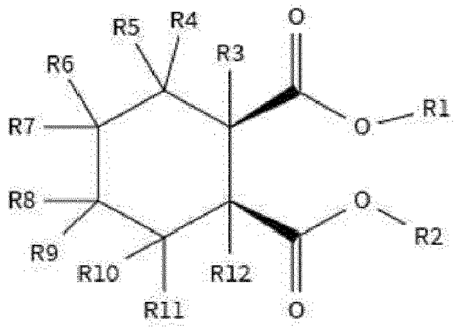

Specific examples of the compound represented by Formula 18 include cis-dimethyl cyclohex-4-ene-1,2-dicarboxylate, cis-diethylcyclohex-4-ene-1,2dicarboxylate, cis-dipropylcyclohex-4-ene-1,2-dicarboxylate, cis-diisopropylcyclohex-4-ene-1,2-dicarboxylate, cis-dibutylcyclohex-4-ene-1,2-dicarboxylate, cis-1-ethyl-2-methylcyclohex-4-ene-1,2-dicarboxylate, cis-1-ethyl-2-propylcyclohex-4-ene-1,2-dicarboxylate, cis-1-ethyl-2-propyl-3-methylcyclohex-4-ene-1,2-dicarboxylate, cis-1-ethyl-2-propyl-3,6-dimethylcyclohex-4-ene-1,2-dicarboxylate, cis-2-ethyl-1-propyl-3,4,6-trimethylcyclohex-4-ene-1,2-dicarboxylate, cis-2-ethyl-1-propyl-4-ethyl3,6-dimethylcyclohex-4-ene-1,2-dicarboxylate, and the like.

[Formula 19]

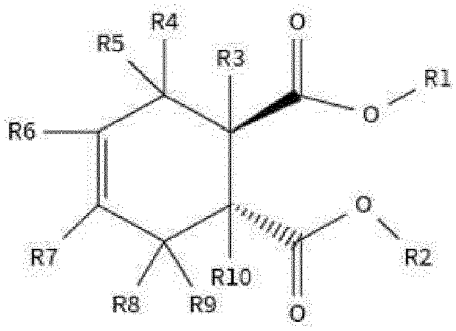

Specific examples of the compound represented by Formula 19 include trans-dimethyl cyclohex-4-ene-1,2-dicarboxylate, trans-diethylcyclohex-4-ene-1,2-dicarboxylate, trans-dipropylcyclohex-4-ene-1,2-dicarboxylate, trans-diisopropylcyclohex-4-ene-1,2-dicarboxylate, trans-dibutylcyclohex-4-ene-1,2-dicarboxylate, trans-1-ethyl-2-methylcyclohex-4-ene-1,2-dicarboxylate, trans-1-ethyl-2-propylcyclohex-4-ene-1,2-dicarboxylate, trans-1-ethyl-2-propyl-3-methylcyclohex-4-ene-1,2-dicarboxylate, trans-1-ethyl-2-propyl-3,6-dimethylcyclohex-4-ene-1,2-dicarboxylate, trans-2-ethyl-1-propyl-3,4,6-trimethylcyclohex-4-ene-1,2-dicarboxylate, trans-2-ethyl-1-propyl-4-ethyl-3,6-dimethylcyclohex-4-ene-1,2-dicarboxylate, and the like.

[Formula 20]

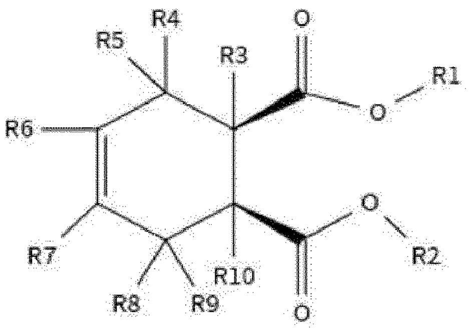

Specific examples of the compound represented by Formula 20 include cis-dimethyl cyclohex-4-ene-1,2-dicarboxylate, cis-diethylcyclohex-4-ene-1,2dicarboxylate, cis-dipropylcyclohex-4-ene-1,2-dicarboxylate, cis-diisopropylcyclohex-4-ene-1,2-dicarboxylate, cis-dibutylcyclohex-4-ene-1,2-dicarboxylate, cis-1-ethyl-2-methylcyclohex-4-ene-1,2-dicarboxylate, cis-1-ethyl-2-propylcyclohex-4-ene-1,2-dicarboxylate, cis-1-ethyl-2-propyl-3-methylcyclohex-4-ene-1,2-dicarboxylate, cis-1-ethyl-2-propyl-3,6-dimethylcyclohex-4-ene-1,2-dicarboxylate, cis-2-ethyl-1-propyl-3,4,6-trimethylcyclohex-4-ene-1,2-dicarboxylate, cis-2-ethyl-1-propyl-4-ethyl3,6-dimethylcyclohex-4-ene-1,2-dicarboxylate, and the like.

[Formula 21]

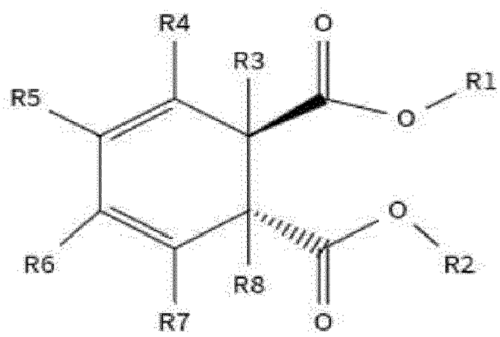

Specific examples of the compound represented by Formula 21 include trans-dimethylcyclohexa-3,5-diene-1,2-dicarboxylate, trans-diethylcyclohexa-3,5-diene-1,2-dicarboxylate, trans-dipropylcyclohexa-3,5-diene-1,2-dicarboxylate, trans-dibutylcyclohexa-3,5-diene-1,2-dicarboxylate, trans-dimethyl-1-methylcyclohexa-3,5-diene-1,2-dicarboxylate, trans-dimethyl-1,2-dimethylcyclohexa-3,5-diene-1,2-dicarboxylate, trans-1-ethyl-2-propyl-1,2-dimethylcyclohexa-3,5-diene-1,2-dicarboxylate, trans-diethyl-4-methylcyclohexa-3,5-diene-1,2-dicarboxylate, trans-diethyl-4,5-dimethylcyclohexa-3,5-diene-1,2-dicarboxylate, trans-diethyl-4-ethyl-3,5,6-trimethylcyclohexa-3,5-diene-1,2-dicarboxylate, and the like.

[Formula 22]

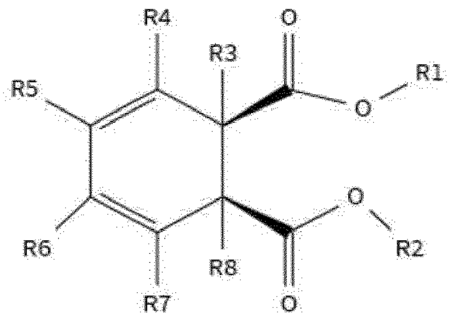

Specific examples of the compound represented by Formula 22 include cis-dimethylcyclohexa-3,5-diene-1,2-dicarboxylate, cis-diethylcyclohexa-3,5-diene-1,2-dicarboxylate, cis-dipropylcyclohexa-3,5-diene-1,2-dicarboxylate, cis-dibutylcyclohexa-3,5-diene-1,2-dicarboxylate, cis-dimethyl-1-methylcyclohexa-3,5-diene-1,2-dicarboxylate, cis-dimethyl-1,2-dimethylcyclohexa-3,5-diene-1,2-dicarboxylate, cis-1-ethyl-2-propyl-1,2-dimethylcyclohexa-3,5-diene-1,2-dicarboxylate, cis-diethyl-4-methylcyclohexa-3,5-diene-1,2-dicarboxylate, cis-diethyl-4,5-dimethylcyclohexa-3,5-diene-1,2-dicarboxylate, cis-diethyl-4-ethyl-3,5,6-trimethylcyclohexa-3,5-diene-1,2-dicarboxylate, and the like.

Step (2) is preferably performed by adding the internal electron donor while generally increasing the temperature of the reaction product of step (1) to 60 to 150°C, preferably 80 to 130°C, and allowing the mixture to react for 1 to 3 hours. If the temperature is lower than 60°C or the reaction time is shorter than 1 hour, the reaction may be difficult to complete, and if the temperature is higher than 150°C or the reaction time is longer than 3 hours, side reactions may occur, resulting in a decrease in the polymerization activity of the resulting catalyst or in the stereoregularity of the resulting polymer.

**As** long as the internal electron donor is added during the temperature increase process, the temperature at which the internal electron donor is added and the number of times the internal electron donor is added are not particularly limited, and two or more different internal electron donors may be added simultaneously or at different temperatures. There is no limit on the total amount of the two internal electron donors used, but the total number of moles of the two internal electron donors used is preferably 0.001 to 2.0 mol per mol of the dialkoxy magnesium used. If the total number of moles of the two internal electron donors used is out of the above range, the polymerization activity of the resulting catalyst or the stereoregularity of the resulting polymer may be lowered, which is undesirable.

Step (3) of the process of producing the solid catalyst is a process of reacting the product of step (2) with a titanium halide in at least two steps at a temperature of 60 to 150°C, preferably 80 to 130°C. Examples of the titanium halide used in step (3) include the titanium halide represented by Formula 8 above.

In the process of producing the solid catalyst, the reaction in each step is preferably performed under a nitrogen gas atmosphere in a reactor equipped with a stirrer, from which moisture and the like have been sufficiently removed.

The solid catalyst produced by the above-described method includes magnesium, titanium, a halogen compound and an internal electron donor. Considering the aspect of catalyst activity, the solid catalyst preferably includes 5 to 40 wt% of magnesium, 0.5 to 10 wt% of titanium, 50 to 85 wt% of a halogen, and 0.01 to 30 wt% of the internal electron donor. In this case, it is possible to further reduce the agglomeration of polymer particles during the production of the copolymer.

In the present disclosure, the method of producing a propylene polymer or a propylene-based copolymer using the solid catalyst produced by the above-described method includes polymerizing propylene or copolymerizing propylene with other alpha-olefin(s), in the presence of the solid catalyst, a cocatalyst, and an external electron donor.

In the present disclosure, the alpha olefin that is used for copolymerization may be at least one olefin selected from among alpha-olefins, each having 2 to 20 carbon atoms (excluding polypropylene having 3 carbon atoms), specifically ethylene, 1-butene, 1-pentene, 4-methyl-1-pentene, vinylcyclohexane, etc., and these alpha-olefins may be used

alone or in combination. Thereamong, ethylene and 1-butene are preferred, and ethylene is particularly preferred.

The solid catalyst may be pre-polymerized with ethylene or an alpha-olefin before being used in a polymerization reaction.

The pre-polymerization reaction may be performed at sufficiently low temperature under ethylene or alpha-olefin pressure conditions in the presence of a hydrocarbon solvent (e.g., hexane), a catalyst component, and an organoaluminum compound (e.g., triethylaluminum). Pre-polymerization helps to improve the shape of the polymer after polymerization by surrounding the catalyst particles with the polymer to maintain the catalyst shape. The weight ratio of the polymer to the catalyst after pre-polymerization is preferably about 0.1:1 to 20:1.

An organometallic compound of Group II or Group III of the periodic table may be used as a cocatalyst component in the method for propylene polymerization or propylene copolymerization. For example, an alkyl aluminum compound is used. The alkyl aluminum compound is represented by the following Formula 23:

[Formula 23] $AlR_3$

wherein each R is independently an alkyl group having 1 to 6 carbon atoms.

Specific examples of the alkyl aluminum compound include trimethyl aluminum, triethyl aluminum, tripropyl aluminum, tributyl aluminum, triisobutyl aluminum, trioctyl aluminum, and the like.

The ratio of the cocatalyst component to the solid catalyst component may be arbitrarily adjusted depending on the polymerization method, and the molar ratio of metal atoms in the cocatalyst component to titanium atoms in the solid catalyst component is preferably in the range of 1 to 1,000, more preferably 10 to 300. If the molar ratio of metal atoms (e.g., aluminum atoms) in the cocatalyst component to titanium atoms in the solid catalyst component is out of the range of 1 to 1,000, a problem may arise in that the polymerization activity of the catalyst system is greatly reduced.

In the method for propylene polymerization or copolymerization, the external electron donor is preferably composed of three types of silane-based compounds as described below. As the dialkoxysilane-based compound used as the external electron donor, it is preferable to use the dialkoxysilane represented by Formula 1. In particular, it is more preferable to use a methoxysilane in which $R^1$ and $R^2$ are each independently an alkyl or cycloalkyl group having 3 to 7 carbon atoms, and $R^3$ is a methyl group.

In addition, the trialkoxysilane-based compounds used as the external electron donor include the compound represented by Formula 2 and the compound represented by Formula 3.

Specific examples of compounds that may be used as the external electron donor include $n\text{-}C_3H_7Si(OCH_3)_3$, $(n\text{-}C_3H_7)_2Si(OCH_3)_2$, $iC_3H_7Si(OCH_3)_3$, $(i\text{-}C_3H_7)_2Si(OCH_3)_2$, $n\text{-}C_4H_9Si(OCH_3)_3$, $(n\text{-}C_4H_9)_2Si(OCH_3)_2$, $i\text{-}C_4H_9Si(OCH_3)_3$, $(i\text{-}C_4H_9)_2Si(OCH_3)_2$, $t\text{-}C_4H_9Si(OCH_3)_3$, $(t\text{-}C_4H_9)_2Si(OCH_3)_2$, $n\text{-}C_5H_{11}Si(OCH_3)_3$, $CH_2CH(OC_2H_5)_3$, (1-propenyl)$Si(OC_2H_5)_3$, $(n\text{-}C_5H_{11})_2Si(OCH_3)_2$, (cyclopentyl)$Si(OCH_3)_3$, (cyclopentyl)$_2Si(OCH_3)_2$, (cyclopentyl)$(CH_3)Si(OCH_3)_2$, (cyclopentyl)$(C_2H_5)Si(OCH_3)_2$, (cyclopentyl)$(C_3H_5)Si(OCH_3)_2$, (cyclohexyl)$Si(OCH_3)_3$, (cyclohexyl)$_2Si(OCH_3)_2$, (cyclohexyl)$(CH_3)Si(OCH_3)_2$, (cyclohexyl)$(C_2H_5)Si(OCH_3)_2$, (cyclohexyl)$(C_3H_5)Si(OCH_3)_2$, (cycloheptyl)$Si(OCH_3)_3$, (cycloheptyl)$_2Si(OCH_3)_2$, (cycloheptyl)$(CH_3)Si(OCH_3)_2$, (1-propenyl)$Si(OCH_3)_3$, (cycloheptyl)$(C_2H_5)Si(OCH_3)_2$, (cycloheptyl)$(C_3H_5)Si(OCH_3)_2$, $PhSi(OCH_3)_3$, $Ph_2Si(OCH_3)_2$ (where Ph is phenyl), $(N(CH_3)_2)Si(OCH_3)_3$, $(N(C_2H_5)_2)Si(OCH_3)_3$, $(N(n\text{-}C_3H_7)_2)Si(OCH_3)_3$, $(N(i\text{-}C_3H_7)_2)Si(OCH_3)_3$, $(N(n\text{-}C_4H_9)_2)Si(OCH_3)_3$, $(N(i\text{-}C_4H_9)_2)Si(OCH_3)_3$, $(N(t\text{-}C_4H_9)_2)Si(OCH_3)_3$, $n\text{-}C_3H_5Si(OC_2H_5)_3$, $(n\text{-}C_3H_7)_2Si(OC_2H_5)_2$, $i\text{-}C_3H_7Si(OC_2H_5)_3$, $(i\text{-}C_3H_7)_2Si(OC_2H_5)_2$, $nC_4H_9Si(OC_2H_5)_3$, $(n\text{-}C_4H_9)_2Si(OC_2H_5)_2$, $i\text{-}C_4H_9Si(OC_2H_5)_3$, $(i\text{-}C_4H_9)_2Si(OC_2H_5)_2$, (1-propenyl)$Si(OC_2H_5)_3$, $t\text{-}C_4H_9Si(OC_2H_5)_3$, $(t\text{-}C_4H_9)_2Si(OC_2H_5)_2$, $n\text{-}C_5H_{11}Si(OC_2H_5)_3$, $(n\text{-}C_5H_{11})_2Si(OC_2H_5)_2$, $(N(CH_3)_2)Si(OC_2H_5)_3$, $(N(C_2H_5)_2)Si(OC_2H_5)_3$, $(N(n\text{-}C_3H_7)_2)Si(OC_2H_5)_3$, $(N(i\text{-}C_3H_7)_2)Si(OC_2H_5)_3$, $(N(n\text{-}C_4H_9)_2)Si(OC_2H_5)_3$, $(N(iC_4H_9)_2)Si(OC_2H_5)_3$, $(N(t\text{-}C_4H_9)_2)Si(OC_2H_5)_3$, (cyclopentyl)$Si(OC_2H_5)_3$, (cyclopentyl)$_2Si(OC_2H_5)_2$, (cyclopentyl)$(CH_3)Si(OC_2H_5)_2$, (cyclopentyl)$(C_2H_5)Si(OC_2H_5)_2$, (cyclopentyl)$(C_3H_5)Si(OC_2H_5)_2$, (cyclohexyl)$Si(OC_2H_5)_3$, (cyclohexyl)$_2Si(OC_2H_5)_2$, (cyclohexyl)$(CH_3)Si(OC_2H_5)_2$, (cyclohexyl)$(C_2H_5)Si(OC_2H_5)_2$, (cyclohexyl)$(C_3H_5)Si(OC_2H_5)_2$, (cycloheptyl)$Si(OC_2H_5)_3$, (cycloheptyl)$_2Si(OC_2H_5)_2$, (cycloheptyl)$(CH_3)Si(OC_2H_5)_2$, (cycloheptyl)$(C_2H_5)Si(OC_2H_5)_2$, (cycloheptyl)$(C_3H_5)Si(OC_2H_5)_2$, (phenyl)$Si(OC_2H_5)_3$, (phenyl)$_2Si(OC_2H_5)_2$, $(CH_3)_3SiCH_2Si(OCH_3)_3$, $(CH_3)_3SiCH_2Si(OC_2H_5)_3$, $(CH_3)_3SiCH_2Si(OC_3H_7)_3$, $(CH_3)_3Si(CH_2)_2Si(OCH_3)_3$, $(CH_3)_3Si(CH_2)_2Si(OC_2H_5)_3$, $(CH_3)_3Si(CH_2)_2Si(OC_3H_7)_3$, $(CH_3)_3Si(CH_2)_3Si(OCH_3)_3$, $(CH_3)_3Si(CH_2)_3Si(OC_2H_5)_3$, $(CH_3)_3Si(CH_2)_3Si(OC_3H_7)_3$, $(CH_3)_3Si(CH_2)_4Si(OCH_3)_3$, $(CH_3)_3Si(CH_2)_4Si(OC_2H_5)_3$, $(CH_3)_3Si(CH_2)_4Si(OC_3H_7)_3$, $[(CH_3)_3SiCH_2]_2Si(OCH_3)_2$, $[(CH_3)_3SiCH_2]_2Si(OC_2H_5)_2$, $[(CH_3)_3Si(CH_2)_2]_2Si(OCH_3)_2$, $[(CH_3)_3Si(CH_2)_2]_2Si(OC_2H_5)_2$, $[(CH_3)_3Si(CH_2)_2]_2Si(OCH_3)_2$, $[(CH_3)_3Si(CH_2)_2]_2Si(OC_2H_5)_2$, $[(CH_3)_3Si(CH_2)_3]_2Si(OCH_3)_2$, $[(CH_3)_3Si(CH_2)_3]_2Si(OC_2H_5)_2$, $[(CH_3)_3Si(CH_2)_4]_2Si(OCH_3)_2$, $[(CH_3)_3Si(CH_2)_4]_2Si(OC_2H_5)_2$, $(C_2H_5)_3SiCH_2Si(OCH_3)_3$, $(C_2H_5)_3SiCH_2Si(OC_2H_5)_3$, $(C_2H_5)_3SiCH_2Si(OC_3H_7)_3$, $(C_2H_5)_3Si(CH_2)_2Si(OCH_3)_3$, $(C_2H_5)_3Si(CH_2)_2Si(OC_2H_5)_3$, $(C_2H_5)_3Si(CH_2)_2Si(OC_3H_7)_3$, $(C_2H_5)_3Si(CH_2)_3Si(OCH_3)_3$, $(C_2H_5)_3Si(CH_2)_3Si(OC_2H_5)_3$, $(C_2H_5)_3Si(CH_2)_3Si(OC_3H_7)_3$, $(C_2H_5)_3Si(CH_2)_4Si(OCH_3)_3$, $(C_2H_5)_3Si(CH_2)_4Si(OC_2H_5)_3$, $(C_2H_5)_3Si(CH_2)_4Si(OC_3H_7)_3$, $(C_2H_5)_3Si(CH_2)_4Si(OC_2H_5)_3$, $[(C_2H_5)_3SiCH_2]_2Si(OCH_3)_2$, $[(C_2H_5)_3SiCH_2]_2Si(OC_2H_5)_2$, $[(C_2H_5)_3Si(CH_2)_2]_2Si(OCH_3)_2$, $[(C_2H_5)_3Si(CH_2)_2]_2Si(OC_2H_5)_2$, $[(C_2H_5)_3Si(CH_2)_2]_2Si(OCH_3)_2$, $[(C_2H_5)_3Si(CH_2)_2]_2Si(OC_2H_5)_2$, $[(C_2H_5)_3Si(CH_2)_3]_2Si(OCH_3)_2$, $[(C_2H_5)_3Si(CH_2)_3]_2Si(OC_2H_5)_2$,

$[(C_2H_5)_3Si(CH_2)_4]_2Si(OCH_3)_2$, $[(C_2H_5)_3Si(CH_2)_4]_2Si(OC_2H_5)_2$, (iso-$C_3H_7$)$(CH_3)_2SiCH_2Si(OCH_3)_3$, (iso-$C_3H_7$)$(CH_3)_2SiCH_2Si(OC_2H_5)_3$, (iso-$C_3H_7$)$(CH_3)_2SiCH_2Si(OC_3H_7)_3$, (iso-$C_3H_7$)$(CH_3)_2Si(CH_2)_2Si(OCH_3)_3$, (iso$C_3H_7$)$(CH_3)_2Si(CH_2)_2Si(OC_2H_5)_3$, (iso-$C_3H_7$)$(CH_3)_2Si(CH_2)_2Si(OC_3H_7)_3$, (iso-$C_3H_7$)$(CH_3)_2Si(CH_2)_3Si(OCH_3)_3$, (iso$C_3H_7$)$(CH_3)_2Si(CH_2)_3Si(OC_2H_5)_3$, (iso-$C_3H_7$)$(CH_3)_2Si(CH_2)_3Si(OC_3H_7)_3$, (iso-$C_3H_7$)$(CH_3)_2Si(CH_2)_4Si(OCH_3)_3$, (iso$C_3H_7$)$(CH_3)_2Si(CH_2)_4Si(OC_2H_5)_3$, (iso-$C_3H_7$)$(CH_3)_2Si(CH_2)_4Si(OC_3H_7)_3$, [(iso-$C_3H_7$)$(CH_3)_2SiCH_2]_2Si(OCH_3)_2$, [(iso$C_3H_7$)$(CH_3)_2SiCH_2]_2Si(OC_2H_5)_2$, [(iso-$C_3H_7$)$(CH_3)_2Si(CH_2)_2]_2Si(OCH_3)_2$, [(iso-$C_3H_7$)$(CH_3)_2Si(CH_2)_2]_2Si(OC_2H_5)_2$, [(iso-$C_3H_7$)$(CH_3)_2Si(CH_2)_2]_2Si(OCH_3)_2$, [(iso-$C_3H_7$)$(CH_3)_2Si(CH_2)_2]_2Si(OC_2H_5)_2$, [(iso$C_3H_7$)$(CH_3)_2Si(CH_2)_3]_2Si(OCH_3)_2$, [(iso-$C_3H_7$)$(CH_3)_2Si(CH_2)_3]_2Si(OC_2H_5)_2$, [(iso-$C_3H_7$)$(CH_3)_2Si(CH_2)_4]_2Si(OCH_3)_2$, [(iso-$C_3H_7$)$(CH_3)_2Si(CH_2)_4]_2Si(OC_2H_5)_2$, (tert-$C_4H_9$)$(CH_3)_2SiCH_2Si(OCH_3)_3$, (tert-$C_4H_9$)$(CH_3)_2SiCH_2Si(OC_2H_5)_3$, (tert-$C_4H_9$)$(CH_3)_2SiCH_2Si(OC_3H_7)_3$, (tert-$C_4H_9$)$(CH_3)_2Si(CH_2)_2Si(OCH_3)_3$, (tert-$C_4H_9$)$(CH_3)_2Si(CH_2)_2Si(OC_2H_5)_3$, (tert-$C_4H_9$)$(CH_3)_2Si(CH_2)_2Si(OC_3H_7)_3$, (tert-$C_4H_9$)$(CH_3)_2Si(CH_2)_3Si(OCH_3)_3$, (tert-$C_4H_9$)$(CH_3)_2Si(CH_2)_3Si(OC_2H_5)_3$, (tert-$C_4H_9$)$(CH_3)_2Si(CH_2)_3Si(OC_3H_7)_3$, (tert-$C_4H_9$)$(CH_3)_2Si(CH_2)_4Si(OCH_3)_3$, (tert-$C_4H_9$)$(CH_3)_2Si(CH_2)_4Si(OC_2H_5)_3$, (tert-$C_4H_9$)$(CH_3)_2Si(CH_2)_4Si(OC_3H_7)_3$, [(tert-$C_4H_9$)$(CH_3)_2SiCH_2]_2Si(OCH_3)_2$, [(tert-$C_4H_9$)$(CH_3)_2SiCH_2]_2Si(OC_2H_5)_2$, [(tert-$C_4H_9$)$(CH_3)_2Si(CH_2)_2]_2Si(OCH_3)_2$, [(tert-$C_4H_9$)$(CH_3)_2Si(CH_2)_2]_2Si(OC_2H_5)_2$, [(tert$C_4H_9$)$(CH_3)_2Si(CH_2)_2]_2Si(OCH_3)_2$, [(tert-$C_4H_9$)$(CH_3)_2Si(CH_2)_2]_2Si(OC_2H_5)_2$, [(tert-$C_4H_9$)$(CH_3)_2Si(CH_2)_3]_2Si(OCH_3)_2$, [(tert-$C_4H_9$)$(CH_3)_2Si(CH_2)_3]_2Si(OC_2H_5)_2$, [(tert-$C_4H_9$)$(CH_3)_2Si(CH_2)_4]_2Si(OCH_3)_2$, [(tert$C_4H_9$)$(CH_3)_2Si(CH_2)_4]_2Si(OC_2H_5)_2(CH_3)_3SiOSi(OCH_3)_3$, $(CH_3)_3SiOSi(OC_2H_5)_3$, $(CH_3)_3SiOSi(OC_3H_7)_3$, $[(CH_3)_3SiO]_2Si(OCH_3)_2$, $[(CH_3)_3SiO]_2Si(OC_2H_5)_2$, $(C_2H_5)_3SiOSi(OCH_3)_3$, $(C_2H_5)_3SiOSi(OC_2H_5)_3$, $(C_2H_5)_3SiOSi(OC_3H_7)_3$, $[(C_2H_5)_3SiO]_2Si(OCH_3)_2$, $[(C_2H_5)_3SiO]_2Si(OC_2H_5)_2$, (iso-$C_3H_7$)$(CH_3)_2SiOSi(OCH_3)_3$, (iso-$C_3H_7$)$(CH_3)_2SiOSi(OC_2H_5)_3$, (iso-$C_3H_7$)$(CH_3)_2SiOSi(OC_3H_7)_3$, [(iso-$C_3H_7$)$(CH_3)_2SiO]_2Si(OCH_3)_2$, [(iso-$C_3H_7$)$(CH_3)_2SiO]_2Si(OC_2H_5)_2$, (tert$C_4H_9$)$(CH_3)_2SiOSi(OCH_3)_3$, (tert-$C_4H_9$)$(CH_3)_2SiOSi(OC_2H_5)_3$, (tert-$C_4H_9$)$(CH_3)_2SiOSi(OC_3H_7)_3$, [(tert$C_4H_9$)$(CH_3)_2SiO]_2Si(OCH_3)_2$, [(tert-$C_4H_9$)$_2SiO]_2Si(OC_2H_5)_2$, and the like.

In the catalyst system for propylene polymerization that is used in the method of producing a propylene polymer according to the present disclosure, the ratio of the external electron donor to the main catalyst component is slightly different depending on the polymerization method, but the molar ratio of silicon atoms in the external electron donor to titanium atoms in the main catalyst component is preferably in the range of 0.1 to 500, more preferably 1 to 100. If the molar ratio of silicon atoms in the external electron donor to titanium atoms in the main catalyst component is less than 0.1, a problem arises in that the stereoregularity of the resulting propylene polymer is significantly lowered, and if the molar ratio is more than 500, a problem arises in that the polymerization activity of the catalyst is significantly reduced.

The molar ratio of the compound represented by Formula 1: the sum of the compound represented by Formula 2 and the compound represented by Formula 3 is preferably in the range of 1:0.5 to 1:2, which is a preferable range for obtaining the effect of this disclosure. In this case, it is possible to ensure the high activity of the catalyst and further reduce the agglomeration of polymer particles during the production of the copolymer. In addition, the molar ratio of the compound represented by Formula 2 to the compound represented by Formula 3 is preferably 3:1 to 1:3. In this case, it is possible to ensure the high activity of the catalyst and further reduce the agglomeration of polymer particles during the production of the copolymer.

In the method for producing a propylene polymer according to the present disclosure, the temperature of the polymerization reaction is preferably 20 to 120°C. If the temperature of the polymerization reaction is lower than 20°C, the reaction does not proceed sufficiently, and if the temperature is higher than 120°C, the catalyst activity is severely lowered and the physical properties of the polymer are adversely affected.

The method for producing a propylene polymer according to the present disclosure may be effectively applied for the production of not only a homopolymer of propylene but also a copolymer of propylene and an alpha-olefin. In particular, to produce a propylene block copolymer, two or more multistep polymerization reactions are performed. Usually, the propylene block copolymer is obtained by polymerizing propylene in the presence of a polymerization catalyst in the first step and copolymerizing ethylene and propylene in the second step. It is also possible to produce a propylene copolymer by copolymerizing propylene with an $\alpha$-olefin other than propylene in the second step or subsequently to the second step. In addition, to produce a propylene terpolymer, it is possible to copolymerize propylene with two types of alpha-olefins other than propylene. Examples of alpha-olefins that may be used for copolymerization include ethylene, 1-butene, 4-methyl-1-pentene, vinylcyclohexane, 1-hexene, 1-octene, and the like, which have 2 to 8 carbon atoms (excluding 3 carbon atoms). The ratio of monomers that are used for the production of the copolymer may be arbitrarily adjusted. Specifically, the ratio of propylene to an ethylene or alpha-olefin comonomer may be 1:1 to 2. In this case, the melt flowability of the produced copolymer is excellent, and agglomeration between particles is reduced.

The present disclosure also provides a propylene polymer or propylene-based copolymer produced by the above-described method. The copolymer is characterized in that the k value in Relational Expression 1 above, which denotes the amount of change in the amorphous content relative to catalyst activity depending on the change in the comonomer content, is 0.050 or less, preferably 0.049 or less, more preferably 0.048. In addition, in the propylene copolymer, no agglomeration between particles is found even at a high comonomer content, suggesting that, when the present disclosure is applied to a commercial process, it is possible to produce a propylene copolymer product having

a higher comonomer content in a more stable manner without process troubles.

The present disclosure also provides a catalyst system including:

A) a Ziegler-type catalyst as a main catalyst component including magnesium, titanium, a halogen and an internal electron donor;
B) an alkyl aluminum compound as a cocatalyst; and
C) an external electron donor including:
a) the dialkoxysilane-based compound represented by Formula 1; b) the trialkoxysilane-based compound represented by Formula 2; and c) the trialkoxysilane-based compound represented by Formula 3.

The catalyst system of the present invention makes it possible to produce polypropylene in high yield and to maintain an amorphous content, which causes agglomeration of polymer particles during the production of a propylene copolymer containing a comonomer, at a low level, while maintaining the comonomer content at a high level.

The present disclosure may be applied to a process of producing a propylene polymer or a propylene-based copolymer using a Ziegler-Natta-type solid catalyst and a combination of three or more external electron donors, and may provide a method of stably producing a propylene-based copolymer having excellent melt flowability and having a high comonomer content by the copolymerization of propylene with an alpha-olefin while maintaining high catalyst activity. That is, in the propylene copolymer produced according to the present disclosure, no agglomeration between particles is found even at a high comonomer content, suggesting that, when the present disclosure is applied to a commercial process, it is possible to produce a propylene copolymer product having a higher comonomer content in a more stable manner without process troubles.

## BRIEF DESCRIPTION OF THE DRAWINGS

FIG. 1 is a photograph of a copolymer according to one Example of the present disclosure.
FIG. 2 is a photograph of a copolymer according to a Comparative Example of the present disclosure.

## DETAILED DESCRIPTION

The present disclosure will be described in detail below with reference to Examples and Comparative Examples below, but the present disclosure is not limited by these Examples.

### Example 1

### [Production of main catalyst component]

**A** 1-L glass reactor equipped with a stirrer was sufficiently replaced with nitrogen, and 112 ml of toluene and 15 g of the diethoxy magnesium produced as described above were introduced into the reactor, and 20 ml of titanium tetrachloride diluted in 30 ml of toluene was introduced into the reactor over 1 hour at 10°C. Next, 5 g of 2-isopropyl-2-isopentyl-1,3-dimethoxypropane was slowly introduced into the reactor while increasing the temperature of the reactor to 100°C. After keeping at 100°C for 2 hours, the temperature was lowered to 90°C, stirring was stopped, the supernatant was removed, and the residue was washed once with 200 ml of toluene. 120 ml of toluene and 20 ml of titanium tetrachloride were added to the washed product, and the temperature was increased to and maintained at 100°C for 2 hours, and this process was repeated once. After completion of the aging process, the slurry mixture was washed twice with 200 ml of toluene for each washing, and washed 5 times with 200 ml of n-hexane for each washing at 40°C to obtain a pale yellow solid catalyst component. The titanium content in the solid catalyst component obtained after drying under flowing nitrogen for 18 hours was 2.3 wt%.

### [Propylene polymerization]

10 mg of the solid catalyst, 10 mmol of triethyl aluminum as a cocatalyst component, and 0.7 mmol of an external electron donor composed of a mixture obtained by mixing diisopropylmethoxysilane, isobutyltriethoxysilane and vinyltriethoxysilane together at a molar ratio of 4:2:1 were introduced into a 4-L high-pressure stainless steel reactor. Subsequently, 1,000 ml of hydrogen and 2.4 L of liquid propylene were sequentially introduced into the reactor, and then the temperature was increased to 70°C and polymerization was performed. When 2 hours elapsed after the initiation of the polymerization, the polypropylene inside the reactor was completely discharged by opening the valve while lowering

the temperature inside the reactor to room temperature.

The resulting polymer was analyzed and the results are shown in Table 1 below.

Here, the catalyst activity and the polymer stereoregularity were determined in the following manner:

(1)

catalyst activity (kg-PP/g-cat) = amount of polymer produced (kg)÷amount of catalyst (g)

(2) bulk density (BD): determined by placing a polymer in a container having a certain volume, measuring the weight, and dividing the measured weight by the volume of the container

(3) melt flow index (g/10 min): measured according to ASTM 1238 at 230°C and 2.16 kg load.

**[Propylene-ethylene copolymerization]**

A 2.0-L stainless reactor equipped with a stirrer was charged with nitrogen, 5 mg of the solid catalyst was placed in the reactor, and 3 mmol of triethyl aluminum and 0.7 mmol of an external electron donor composed of a mixture obtained by mixing diisopropylmethoxysilane, isobutyltriethoxysilane and vinyltriethoxysilane together at a molar ratio of 4:2:1 were introduced into the reactor. Next, 1.2 L of liquefied propylene and 1,000 ml of hydrogen were introduced into the reactor, and then pre-polymerization was performed at 20°C for 5 minutes. Thereafter, polymerization was performed while introducing 200, 300, or 400 sccm of ethylene through MFC at 70°C for 30 minutes, thus obtaining propylene-based copolymers. The results are shown in Table 2 below. The amorphous content in ethylene-propylene, the ethylene content in the copolymer, and the melting temperature, shown in Table 2 below, were determined in the following manner:

(1) Ethylene-propylene amorphous content (X/S, wt%): the amount (wt%) of components precipitated after extracting the copolymer with xylene and removing the xylene
(2) the ethylene content in the copolymer (B-C2, B-C4): the ethylene content measured in a copolymer sample by infrared spectroscopy (FT-IR) (calculated based on a calibration curve prepared using a standard sample)
(3) melting temperature (Tm):
measured by differential scanning calorimetry while cooling a sample to 40°C at a rate of 10°C/min after maintaining the sample at 200°C for 7 minutes.

**Example 2**

A solid catalyst was produced in the same manner as in Example 1. Propylene polymerization and propylene-ethylene polymerization were performed in the same manner as in Example 1, except that 0.7 mmol of a mixture obtained by mixing dicyclopentyldimethoxysilane, isobutyltriethoxysilane and vinyltriethoxysilane together at a molar ratio of 3.3:3:1.7 was introduced as the external electron donor.

**Comparative Example 1**

A solid catalyst was produced in the same manner as in Example 1. Propylene polymerization and propylene-ethylene polymerization were performed in the same manner as in Example 1, except that 0.7 mmol of diisopropyldimethoxysilane was introduced as the external electron donor.

**Comparative Example 2**

A solid catalyst was produced in the same manner as in Example 1. Propylene polymerization and propylene-ethylene polymerization were performed in the same manner as in Example 1, except that 0.7 mmol of dicyclopentyldimethoxysilane was introduced as the external electron donor was introduced as the external electron donor.

**Comparative Example 3**

A solid catalyst was produced in the same manner as in Example 1. Propylene polymerization and propylene-ethylene polymerization were performed in the same manner as in Example 1, except that 0.7 mmol of cyclohexylmethyldimethoxysilane was introduced as the external electron donor was introduced as the external electron donor.

[Table 1]

| | Catalyst activity (kg-polymer/g-cat) | Bulk density (BD) | Melt index (MI) |
|---|---|---|---|
| Example 1 | 71 | 0.34 | 7.1 |
| Example 2 | 73 | 0.34 | 7.2 |
| Comparative Example 1 | 48 | 0.33 | 7.1 |
| Comparative Example 2 | 46 | 0.36 | 7.1 |
| Comparative Example 3 | 52 | 0.36 | 7.3 |

[Table 2]

| Entry | | Propylene-ethylene copolymerization | | | | | |
|---|---|---|---|---|---|---|---|
| | Cataly st | Amount of C2 introduced (cc) | Catalyst activity (kg-polymer/g-cat) | B-C2 (wt%) | Tm (° C) | X/S (wt%) | k |
| 1 | Example 1 | 2000 | 28 | 1.19 | 153.4 | 1.8 | 0.0478 |
| 2 | Example 1 | 4000 | 27 | 2.24 | 146.9 | 3.1 | |
| 3 | Example 1 | 6000 | 33 | 3.08 | 75.9 | 5.1 | |
| 4 | Example 2 | 2000 | 25 | 1.21 | 153.0 | 2.0 | 0.0393 |
| 5 | Example 2 | 4000 | 28 | 2.17 | 147.1 | 3.3 | |
| 6 | Example 2 | 6000 | 33 | 3.03 | 141.4 | 5.0 | |
| 7 | Comparative Example 1 | 2000 | 13 | 2.16 | 151.8 | 2.7 | 0.0536 |
| 8 | Comparative Example 1 | 4000 | 20 | 2.87 | 144.4 | 4.3 | |
| 9 | Comparative Example 1 | 6000 | 23 | 3.55 | 140.4 | 6.5 | |
| 10 | Comparative Example 2 | 2000 | 23 | 1.36 | 153.0 | 2.3 | 0.0766 |
| 11 | Comparative Example 2 | 4000 | 18 | 2.56 | 145.6 | 3.7 | |
| 12 | Comparative Example 2 | 6000 | 23 | 3.32 | 140.4 | 5.7 | |
| 13 | Comparative Example 3 | 2000 | 29 | 0.97 | 153.3 | 2.4 | 0.0736 |
| 14 | Comparative Example 3 | 4000 | 24 | 2.05 | 147.2 | 5.4 | |
| 15 | Comparative Example 3 | 6000 | 32 | 3.02 | 141.4 | 7.4 | |

As shown in Table 1 above, Examples 1 and 2, in which a combination of Formulas 1, 2 and 3 was used, showed similar levels in terms of bulk density and melt flowability in propylene polymerization, compared to those of Comparative Examples 1 to 3, but exhibited higher activity. This suggests that the combination of Formulas 1, 2 and 3 increases productivity in the production of polypropylene and allows the produced polypropylene to have a low content of catalyst residues.

The results shown in Table 2 above show that Examples 1 and 2 maintain higher catalyst activity than Comparative Examples 1 to 3 in the production of the propylene copolymer. As the content of ethylene in the propylene-ethylene copolymer increased, the amorphous content increased, but the k value in Relational Expression 1 considering the ethylene content in the copolymer and the catalyst activity was lower in Examples 1 and 2 than in Comparative Examples 1 to 3, indicating that the amorphous content was lower in Examples 1 and 2 than in Comparative Examples 1 to 3. In addition, the k value representing the change in amorphous content relative to catalyst activity (R/A) depending on the change in the content of the comonomer ethylene was lower in the Examples than in the Comparative Examples, indicating that, according to the present disclosure, the amorphous content relative to catalyst activity may be maintained at a relatively low level even if the comonomer content increases.

Therefore, according to the present disclosure, it is possible to produce a propylene copolymer having a high comonomer content and a low amorphous content while maintaining high catalyst activity and dramatically reducing agglomeration of polymer particles during the production of the copolymer.

## Claims

**1.** A method of producing a propylene polymer or a propylene-based copolymer using a catalyst system,

wherein the catalyst system comprises:

A) a Ziegler-type catalyst as a main catalyst component comprising magnesium, titanium, a halogen and an internal electron donor;
B) an alkyl aluminum compound as a cocatalyst; and
C) an external electron donor composed of: a) a dialkoxysilane-based compound represented by the following Formula 1; b) a trialkoxysilane-based compound represented by the following Formula 2; and c) a trialkoxysilane-based compound represented by the following Formula 3:

[Formula 1] $R^1R^2Si(OR^3)_2$

wherein $R^1$ and $R^2$ are each independently an alkyl group having 1 to 12 carbon atoms, an aryl group having 6 to 12 carbon atoms, a cycloalkyl group having 4 to 12 carbon atoms, an alkylamine group having 1 to 12 carbon atoms, an alkylsilyl group having 1 to 12 carbon atoms, or an alkoxysilyl group having 1 to 12 carbon atoms, and $R^3$ represents an alkyl group having 1 to 3 carbon atoms;

[Formula 2] $R^4Si(OR^5)_3$

wherein $R^4$ represents an alkyl group having 1 to 12 carbon atoms, an aryl group having 6 to 12 carbon atoms, a cycloalkyl group having 4 to 12 carbon atoms, an alkylamine group having 1 to 12 carbon atoms, an alkoxy group having 1 to 12 carbon atoms, an alkylsilyl group having 1 to 12 carbon atoms, or an alkoxysilyl group having 1 to 12 carbon atoms, and $R^5$ represents an alkyl group having 1 to 4 carbon atoms;

[Formula 3] $R^6Si(OR^7)_3$

wherein $R^6$ represents an alkenyl group having 2 to 12 carbon atoms, and $R^7$ represents an alkyl group having 1 to 4 carbon atoms.

**2.** The method of claim 1, wherein an amount of change in an amorphous content of the propylene polymer or propylene-based copolymer relative to catalyst activity depending on a comonomer content of the propylene polymer or propylene-based copolymer satisfies Relational Expression 1 below, and k in Relational Expression 1 is 0.050 or less:

[Relational Expression 1]

$$R/A=k*C+m$$

wherein R represents the amorphous content (X/S wt%) of the polymer, A represents the catalyst activity (kg-polymer/g-cat), C represents the comonomer content (wt%) in the polymer or copolymer, k denotes the amount of

change in the amorphous content relative to catalyst activity depending on the change in the comonomer content, and m is a constant of linear relationship.

**3.** The method of claim 2, wherein k is 0.049 or less.

**4.** The method of claim 1, wherein the main catalyst component comprises 5 to 40 wt% of magnesium, 0.5 to 10 wt% of titanium, 50 to 85 wt% of a halogen, and 0.01 to 30 wt% of the internal electron donor.

**5.** The method of claim 1, wherein the internal electron donor in the main catalyst component comprises at least one selected from the group consisting of phthalic acid esters, cyclic esters, and 1,3-diether compounds.

**6.** The method of claim 1, wherein the cocatalyst is an alkyl aluminum compound represented by the following Formula 4:

[Formula 4] $AlR_3$

wherein R is an alkyl group having 1 to 6 carbon atoms.

**7.** The method of claim 1, wherein a molar ratio of aluminum atoms in the cocatalyst to titanium atoms in the main catalyst component is in the range of 1:1 to 1:1,000.

**8.** The method of claim 1, wherein a molar ratio of silicon atoms in the external electron donor to titanium atoms in the main catalyst component is in the range of 1:0.1 to 1:500.

**9.** The method of claim 1, wherein a molar ratio of the compound represented by Formula 1 to the sum of the compound represented by Formula 2 and the compound represented by Formula 3 is in the range of 1:0.5 to 1:2.

**10.** The method of claim 1, wherein a molar ratio of the compound represented by Formula 2 to the compound represented by Formula 3 is in the range of 3:1 to 1:3.

**11.** The method of claim 1, comprising homopolymerization of propylene or copolymerization of propylene and ethylene, followed by copolymerization of propylene and an ethylene or alpha-olefin comonomer, mixed at a molar ratio of 1:1 to 1:2.

**12.** A propylene polymer or copolymer produced by the method set forth in any one of claims 1 to 11.

**13.** A catalyst system for production of a propylene polymer or a propylene-based copolymer, the catalyst system comprising:

A) a Ziegler-type catalyst as a main catalyst component comprising magnesium, titanium, a halogen and an internal electron donor;
B) an alkyl aluminum compound as a cocatalyst; and
C) an external electron donor composed of: a) a dialkoxysilane-based compound represented by the following Formula 1; b) a trialkoxysilane-based compound represented by the following Formula 2; and c) a trialkoxysilane-based compound represented by the following Formula 3:

[Formula 1] $R^1R^2Si(OR^3)_2$

wherein $R^1$ and $R^2$ are each independently an alkyl group having 1 to 12 carbon atoms, an aryl group having 6 to 12 carbon atoms, a cycloalkyl group having 4 to 12 carbon atoms, an alkylamine group having 1 to 12 carbon atoms, an alkylsilyl group having 1 to 12 carbon atoms, or an alkoxysilyl group having 1 to 12 carbon atoms, and $R^3$ represents an alkyl group having 1 to 3 carbon atoms;

[Formula 2] $R^4Si(OR^5)_3$

wherein $R^4$ represents an alkyl group having 1 to 12 carbon atoms, an aryl group having 6 to 12 carbon atoms, a cycloalkyl group having 4 to 12 carbon atoms, an alkylamine group having 1 to 12 carbon atoms, an alkoxy group having 1 to 12 carbon atoms, an alkylsilyl group having 1 to 12 carbon atoms, or an

alkoxysilyl group having 1 to 12 carbon atoms, and $R^5$ represents an alkyl group having 1 to 4 carbon atoms;

[Formula 3] $R^6Si(OR^7)^3$

wherein $R^6$ represents an alkenyl group having 2 to 12 carbon atoms, and $R^7$ represents an alkyl group having 1 to 4 carbon atoms.

**14.** The catalyst system of claim 13, wherein an amount of change in an amorphous content of the propylene polymer or propylene-based copolymer relative to catalyst activity depending on a comonomer content of the propylene polymer or propylene-based copolymer satisfies Relational Expression 1 below, and k in Relational Expression 1 is 0.050 or less:

[Relational Expression 1]

$$R/A=k*C+m$$

wherein R represents the amorphous content (X/S wt%) of the polymer, A represents the catalyst activity (kg-polymer/g-cat), C represents the comonomer content (wt%) in the polymer or copolymer, k denotes the amount of change in the amorphous content relative to catalyst activity depending on the change in the comonomer content, and m is a constant of linear relationship.

**15.** The catalyst system of claim 14, wherein k is 0.049 or less.

FIG. 1

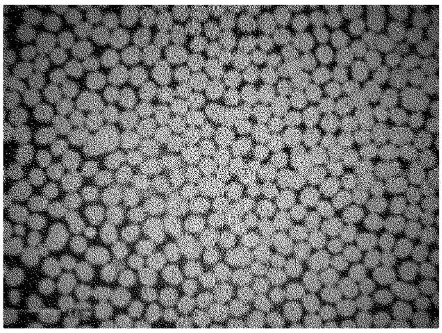

*FIG.2*

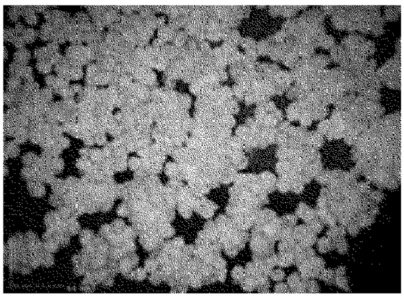

Europäisches Patentamt
European Patent Office
Office européen des brevets

# EUROPEAN SEARCH REPORT

Application Number
EP 23 20 8743

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br><br>Y | KR 2010 0058126 A (SAMSUNG TOTAL PETROCHEMICALS [KR]) 3 June 2010 (2010-06-03)<br>* page 9, paragraphs 39-47, example 1 and page 11, table 1, example 1 *<br>----- | 1-10, 12-15<br><br><br>11 | INV.<br>C08F10/06<br>C08F4/646 |
| X<br><br><br>Y | KR 2010 0027875 A (SAMSUNG TOTAL PETROCHEMICALS [KR]) 11 March 2010 (2010-03-11)<br>* page 8, paragraphs 23-37, example 1 and page 10, table 1, example 1 *<br>----- | 1-10, 12-15<br><br><br>11 | |
| Y | EP 3 689 918 A1 (TOHO TITANIUM CO LTD [JP]) 5 August 2020 (2020-08-05)<br>* pages 23-25, example 7 *<br>----- | 11 | |
| A | WO 02/051881 A1 (SAMSUNG GENERAL CHEMICALS CO [KR]) 4 July 2002 (2002-07-04)<br>* the whole document *<br>----- | 1-15 | |
| | | | TECHNICAL FIELDS SEARCHED (IPC) |
| | | | C08F |

The present search report has been drawn up for all claims

1

| Place of search | Date of completion of the search | Examiner |
|---|---|---|
| Munich | 28 March 2024 | Luka, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........................................................
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 23 20 8743

This annex lists the patent family members relating to the patent documents cited in the above-mentioned European search report. The members are as contained in the European Patent Office EDP file on
The European Patent Office is in no way liable for these particulars which are merely given for the purpose of information.

28-03-2024

| Patent document cited in search report | | Publication date | Patent family member(s) | | | Publication date |
|---|---|---|---|---|---|---|
| KR 20100058126 | A | 03-06-2010 | NONE | | | |
| KR 20100027875 | A | 11-03-2010 | NONE | | | |
| EP 3689918 | A1 | 05-08-2020 | CN | 111065657 | A | 24-04-2020 |
| | | | EP | 3689918 | A1 | 05-08-2020 |
| | | | JP | 7212625 | B2 | 25-01-2023 |
| | | | JP | WO2019064967 | A1 | 10-09-2020 |
| | | | KR | 20200054944 | A | 20-05-2020 |
| | | | TW | 201920304 | A | 01-06-2019 |
| | | | US | 2020199274 | A1 | 25-06-2020 |
| | | | WO | 2019064967 | A1 | 04-04-2019 |
| WO 02051881 | A1 | 04-07-2002 | CN | 1486333 | A | 31-03-2004 |
| | | | EP | 1360210 | A1 | 12-11-2003 |
| | | | JP | 2002212219 | A | 31-07-2002 |
| | | | KR | 20020054051 | A | 06-07-2002 |
| | | | US | 2002120079 | A1 | 29-08-2002 |
| | | | WO | 02051881 | A1 | 04-07-2002 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 7893003 B
- US 8067510 B
- KR 1639497 B1
- KR 1764561 B1